Europäisches Patentamt

European Patent Office

Office européen des brevets

(19)

(11) Publication number: **0 250 609**

**A1**

(12) **EUROPEAN PATENT APPLICATION**

(21) Application number: **86108352.5**

(22) Date of filing: **19.06.86**

(51) Int. Cl.⁴: **F16H 3/30 , //B23Q5/14**

(43) Date of publication of application:
**07.01.88 Bulletin 88/01**

(84) Designated Contracting States:
**DE FR GB**

(71) Applicant: **Lovrenich, Rodger T.**
**209 Whispering Sands**
**Santa Teresa New Mexico 88008(US)**

Applicant: **Brems, John H.**
**2800 S. Ocean Boulevard**
**Boca Raton Florida(US)**

(72) Inventor: **Lovrenich, Rodger T.**
**209 Whispering Sands**
**Santa Teresa New Mexico 88008(US)**
Inventor: **Brems, John H.**
**2800 S. Ocean Boulevard**
**Boca Raton Florida(US)**

(74) Representative: **Dipl.-Ing. H. Hauck Dipl.-Phys.**
**W. Schmitz Dipl.-Ing. E. Graalfs Dipl.-Ing. W.**
**Wehnert Dr.-Ing. W. Döring**
**Mozartstrasse 23**
**D-8000 München 2(DE)**

(54) **Shiftable transmission motor drive with assured input-output relationship.**

(57) A shiftable transmission drive with assured input-output relationship includes a drive motor-transmission mechanism wherein a drive motor (10 or 110) drives an output shaft and load (32 or 132) at different rates through a shiftable transmission (18 or 118). The output shaft and load is always directly coupled to the drive motor through the shiftable transmission. The output shaft is thus always under control and its position precisely known. An encoder (36 or 136) is coupled to the drive motor, and thus to the load, for indicating both incremental motion at the load and position at which the transmission may be shifted. The transmission is preferably a spur gear transmission.

Fig. I

Fig. 2

# SHIFTABLE TRANSMISSION MOTOR DRIVE WITH ASSURED INPUT-OUTPUT RELATIONSHIP

The present invention relates to a drive motor-transmission arrangement wherein the precise rotary motion of the motor output shaft is continuously monitored and transmission shifting is accomplished only at predetermined rotational positions under control of a microprocessor to avoid clashing of transmission gearing.

## Background of the Invention

In a motor driven device such as a machine tool, it is important to know precise locations so that accurate work can be rapidly accomplished. This is particularly true in large automated production facilities involving major capital investment. Work must be done within close tolerances in a minimum amount of time.

The objective in automated machining is to rapidly move a tool, such as a drill for example, to a position as close as possible to the workpiece. The movement of the tool must then be slowed from rapid advance to a slower feed rate to engage the workpiece. The changeover from rapid transverse to feed must occur at a precise repeatable location or the tool may "slide over" into the workpiece, resulting in tool breakage and/or workpiece destruction. If the rapid/feed shift point is backed off to insure against breakage, excessive "air cutting" time is introduced as the tool moves through the air at the feed rate.

Various arrangement have been proposed for linearly advancing and retracting a rotating shaft in machine tools at two different speeds, such as "rapid transverse" and "feed speed". One approach employs two different electric motors, one for each mode. The two-motor approach has good high speed capability and high thrust. However, this approach has a very poor duty cycle capability, high parasitic "air cutting" time, does not eliminate tool-breaking slide over, cannot readily vary speeds through programmed control, is bulky and occupies excessive floor space, cannot provide dual platen position verification for safety, and has the disadvantages of mechanical braking and mechanical limit switches.

A second approach employs a single direct servo drive. This approach has low parasitic time, eliminates slide over, is versatile, and contains no mechanical limit switches or mechanically cycling brakes. It has good rapid transverse capability, but its maximum thrust capability is poor and does not exhibit high thrust against a stop. Furthermore, this approach is bulky, cannot perform dual platen position verification for safety, and has a high electrical failure rate due to its requirement for many electronic components.

A third approach employs a single servo motor with a fixed ratio shiftable transmission. This approach permits use of a small motor, such as a two horspower motor, has fast continuous duty cycle capability and low parasitic time, and eliminates mechanical limit switches and mechanical cycling brakes. However, maximum rapid transverse capability and high feed thrust must be compromised one for the other according to the single gear ratios selected. Moreover, dual platen position verification cannot be accomplished, and the electrical failure rate remains undesirably high.

Best results are obtained by employing a single electric motor capable of moving in rotational increments, in combination with a shiftable transmission. This motor may be an encoded a.c. or d.c. motor or a stepper motor. Optimum results are obtained using a stepper motor with position feedback. Of the systems discussed above, this arrangement has the fastest continuous duty cycle capability. It also has low parasitic time, eliminate slide over, has good maximum thrust capability and continuous high thrust against a stop, is versatile and compact, eliminates mechanical limit switches and mechanical cycling brakes, and has a low failure rate since it uses fewer electronic components. In addition, a shiftable stepper motor system is inherently fail-safe and is virtually "runaway proof." The motor permanent magnets provide power-off holding capability. A digital pulse train is required to obtain rotation. Even if one step more than desired is taken this is usually tatamount to only a degree or two of rotation and very small linear motion of the machine lead screw shaft. A shiftable stepper motor system has the highest degree of computer fault diagnosis capability, and has the lowest communication interface cost

## Objects and Summary of the Invention

A general object of the present invention is to provide a multiple speed motor drive system which possesses improved reliability and economy as compared with multiple speed system of the prior art.

A more specific object of the invention is to provide a shiftable motor drive system wherein transmission gear clashing is avoided.

The foregoing and other objects are accomplished in exemplary embodiments of the present invention which include a drive motor controlled by a control mechanism to impart incremental rotation through a shiftable transmission to an output shaft. The increments of rotation of the drive motor are coninuously monitored by a counter or the like so that position of the output shaft is always known. The gears in the transmission are selected for meshing at known positions of rotation, and the drive motor is slowed or stopped at selected positions to permit shifting. The transmission has no neutral position. The relationship of the output shaft to the input shaft is maintained at all times during shifting.

## Brief Description of the Drawings

Figure 1 is a schematic diagram of a first embodiment of the invention with a drive motor-transmission mechanism having an encoder to determine motor shaft position.

Figure 2 is a schematic diagram which illustrates operation of the encoder used in the drive motor-transmission mechanism of Figure 1.

Figures 3-5 are fragmentary views of the transmission of Figure 1 showing the relative positions of the gears when the transmission is in high-speed, shifting and low-speed conditions respectively.

Figure 6 is a schematic diagram of a second embodiment of the present invention employing an incremental drive motor such as a stepper motor.

## Detailed Description of the Preferred Embodiments

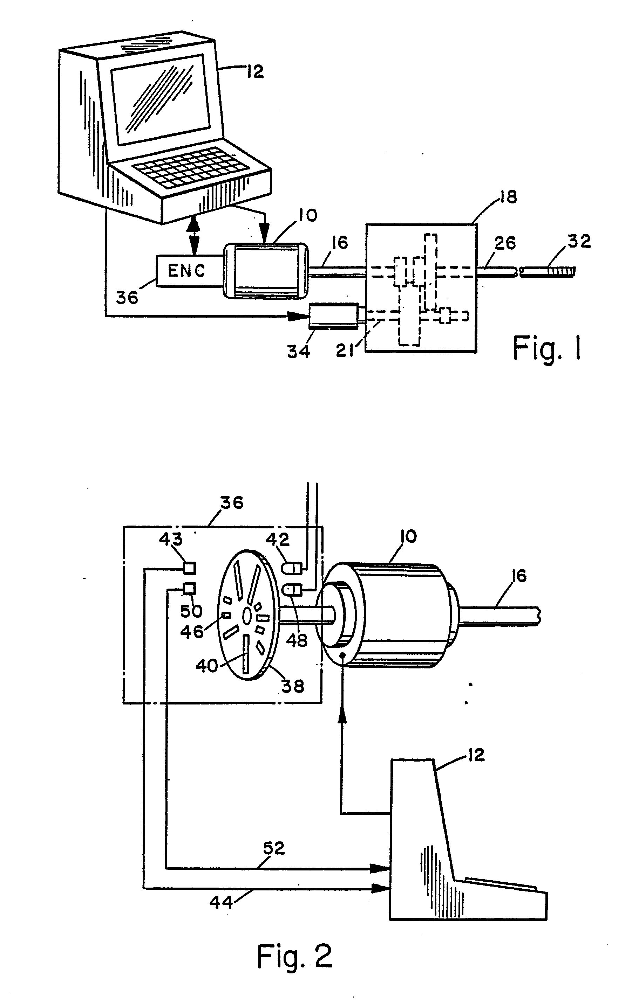

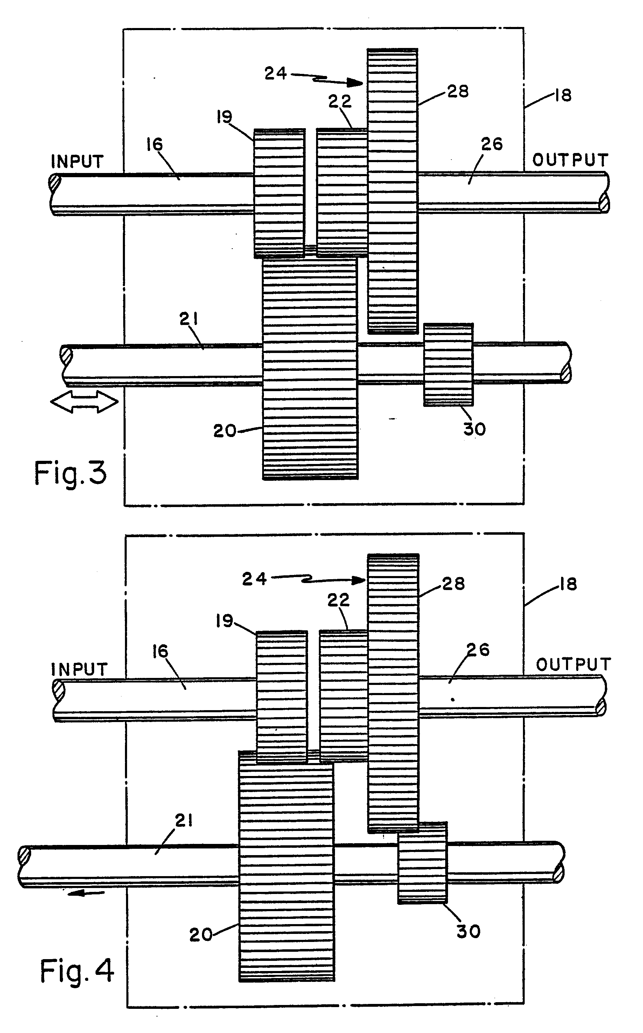

Referring to FIG. 1, a electric drive motor 10 is energized by a microprocessor 12 such as a Zilog Z-80. Drive motor 10 may be an electric incremental drive or continuous drive motor. The motor output shaft 16 is connected to a shiftable transmission 18. As shown in detail in Figures 3-5, transmission 18 preferably comprises a spur gear transmission, although other kinds of transmissions may be employed. Motor output shaft 16 is also coupled to an encoder 36 which feeds signals to microprocessor 12 as a function of shaft position. A solenoid actuator 34 is electrically controlled by microprocessor 12 for shifting transmission 18. Transmission 18 has an output shaft 26 coupled by a ball-type lead screw 32 or the like to a machine tool (not shown).

Encoder 36 is illustrated schematically in FIG. 2. An optical disc 38 is coupled to motor shaft 16 and has a multiplicity of slots 40 disposed in an angularly spaced uniform array at first radius from the disc axis of rotation. A second series of slots 46 is arranged around the disc axis radially outwardly of slots 40 at angular positions which correspond to motor shaft positions at which transmission 18 may be shifted without clashing. A pair of light sources 48, 42 are positioned adjacent to disc 38 at radii which respectively correspond to the radii of slots 40, 46, and a pair of photocells 50, 43 are aligned with sources 48, 42 on the opposite side of disc 38. Photocell 50 is connected at 52 to microprocessor 12 for feeding thereto pulses indicative of incremental shaft rotation, and photocell 43 is likewise connected at 44 to microprocessor 12 to indicate positions at which transmission 18 (FIG. 1) may be shifted.

Figure 3 shows the high speed position of transmission 18. Motor shaft 16 has input gear 19 fixed thereon. Input gear 19 is engaged with a gear 20 affixed to a shaft 21 which is freely rotatably and axially shiftable, as indicated by the two-way arrow. Gear 20 is also engaged with a gear 22 which is part of a gear cluster 24 affixed to the end of output shaft 26. A gear 28, which is also part of cluster 24, is adjacent to but disengaged from a gear 30 on shaft 21. In the illustrated embodiment, gears 19 and 22 have the same number of teeth, so there is a one-to-one ratio between input shaft 16 and output shaft 26.

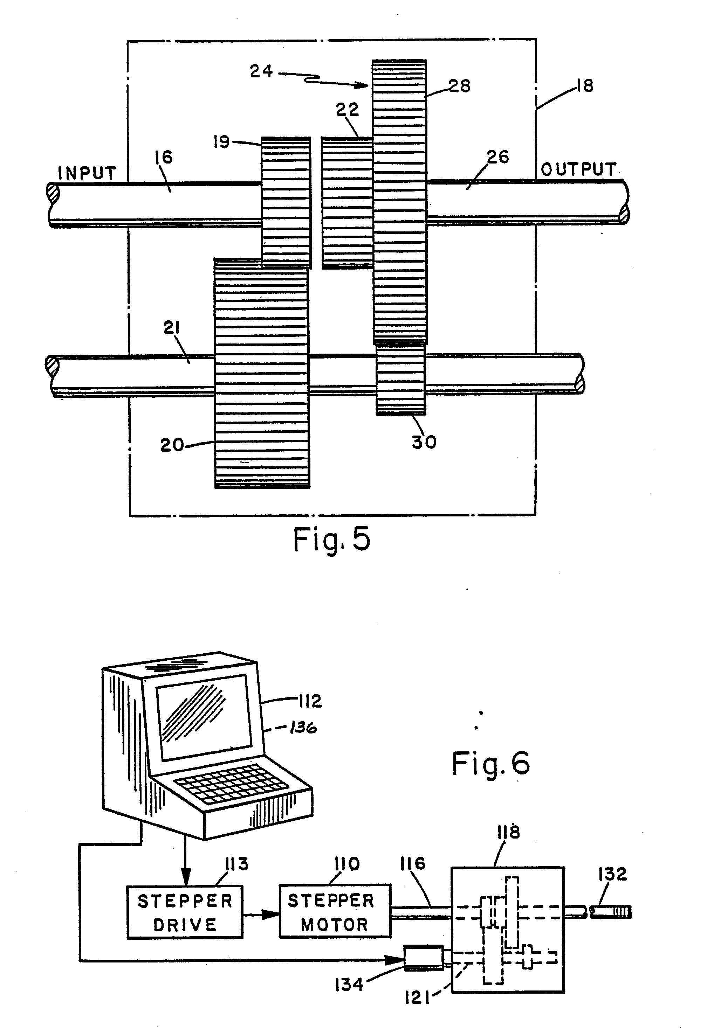

When the motor has completed its rotation in the rapid transverse mode for the desired linear motion of the tool coupled to shaft 26, shifting must take place to move the transmission into the low speed or feed condition - i.e. with gears 20, 22 disengaged and gears 28, 30 engaged. This means that shaft 21 must be shifted to the left from the high speed position shown in Figure 3 to the low speed position shown in Figure 5. This is accomplished by slowing or stopping motor 10 (FIG. 1) and issuing a shift command from microprocessor 12 to solenoid actuator 34 when a slot 46 (FIG. 2) in disc 38 indicates an allowable shift position. When this takes place, shaft 21 moves to the left as shown in Figure 4, gear 20 is engaged with gear 22 and gear 30 is engaged with gear 28. It will be noted that the axial dimensions of the various gears and positioning of gears 20, 30 on shaft 21 are such that shafts 16, 26 are never disengaged, so that input shaft 16 and encoder 36 do not lose track of output shaft 26 during shifting. As the shaft 21 moves further to the left to the position shown in Figure 5, gear 22 is disengaged from gear 20. The drive is now through gears 19, 20, 30 and 28 in the low speed position. After the desired amount of rotation, motor 10 is again slowed or stopped, and solenoid actuation 34 is again energized but in the opposite direction to shift shaft 21 back through the position shown in Figure 4 to the position shown in Figure 3 for rapid retraction of the tool.

A second embodiment of the present invention employing an incremental drive motor, such as a stepper motor is shown in Figure 6. A microprocessor 112 is electrically connected through a stepper drive 113 to a stepper motor 110. The embodiment in FIG. 6 is otherwise similar to that of FIG. 1. Note, however, that use of a stepper motor 110 permits tracking of shaft position internally of microprocessor 112 without requiring a separate encoder 36. Stated differently, the structure and function of encoder 36 (FIG. 1) in the embodiment of FIG. 6 are still employed, but are contained within microprocessor 112.

It will be apparent that, with the apparatus of the present invention, control of output motion is never lost but is continually maintained even during shifting. The increments of motor shaft rotation always indicate the precise position of the output shaft and leas screw 32 (FIG. 1) and 132 (FIG. 6). The microprocessor tracks transmission position and increments of rotation in each gear ratio. Thus, in a typical example, the microprocessor has the duty to keep track of the steps in the high speed mode (rapid transverse) and the steps in the low speed mode (feed speed) for a determination of the total linear motion of the machine slide. This is far different from the use of a conventional motor or clutch arrangement wherein one cannot always reliably determine where the output device stops. Tests show that the window for returning to the starting position on a conventional clutch drive is 382 mils. In the device of the present invention, the window is six mils. The pulses of the encoder or stepper motor provide a very accurate indication of the output position. The transmission is positive and easily shiftable.

**Claims**

1. A shiftable transmission motor drive arrangement comprising a drive motor (10 or 110) having an output shaft (16 or 116), transmission means (18 or 118) coupling said motor output shaft to a load (32 or 132), means (34 or 134) for shifting said transmission so as to obtain predetermined drive ratios between said shaft and said load, and control means (12 or 112) coupled to said motor and said shifting means for obtaining predetermined motion at said load, characterized in that said arrangement further comprises means (36 or 136) operatively coupled to said shaft (16 or 116) for providing first signals indicator of increments of shaft rotation and second signals at predetermined rotational positions of said shaft at which said transmission (18 or 118) can be shifted, said control means (12 or 112) being responsive to said second signals for actuating said shifting means (34 or 134).

2. The arrangement set forth in claim 1 further characterized in that said transmission means (18 or 118) is constructed and arranged such that said shaft (16 or 116) remains directly coupled to said load (32 or 132) during shifting of said transmission means whereby said control means (12 or 112) retains accurate indication of position of said load.

3. The arrangement set forth in claim 2 characterized in that said transmission means (18 or 118) comprises an input gear (19) on said shaft (16 or 116), a shift mechanism including a first transfer gear (20) on a rotatable linearly shiftable transfer shaft (21) and a second gear (30) on said transfer shaft, and an output gear cluster (24) on an output shaft (26) coupled to said load (32 or 132) and having a direct drive output gear (22) and a ratioed output gear (28) thereon, said shifting means (34 or 134) being coupled to said transfer shaft (21) for moving said shaft (21) axially between a direct drive position and a ratioed gear position.

Fig. I

Fig. 2

Fig.3

Fig.4

INPUT 16    19    24    22    28    18    26    OUTPUT

21    20    30

Fig. 5

112
136

Fig. 6

113    110    116    118    132

STEPPER DRIVE → STEPPER MOTOR

134    121

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 255 992 (MASCHINENFABRIK HEID AG)<br><br>--- | | F 16 H 3/30 //<br>B 23 Q 5/14 |
| A | US-A-4 443 137 (ALBRENT)<br><br>--- | | |
| A | US-A-3 886 809 (LASZLO J. KISS)<br><br>----- | | |

|  | TECHNICAL FIELDS SEARCHED (Int. Cl.4) |
|---|---|
| | F 16 H<br>B 23 Q |

The present search report has been drawn up for all claims

| Place of search | Date of completion of the search | Examiner |
|---|---|---|
| THE HAGUE | 25-02-1987 | BEERNAERT J.E. |